# EUROPÄISCHE PATENTSCHRIFT

(11) **EP 1 515 059 B1**
(45) Veröffentlichungstag und Bekanntmachung des Hinweises auf die Patenterteilung: **19.03.2008**
(21) Anmeldenummer: 04013095.7
(22) Anmeldetag: 03.06.2004
(51) Int. Cl.: F16D 25/10

(54) **Einrichtung zur axialen Sicherung einer Kupplungseinrichtung an einer Drehdurchführung**
Device for axially securing a clutch device on a rotary joint
Dispositif de fixation axiale d'un embrayage sur un joint rotatif

(30) Priorität: 11.10.2003 EP 03023013; 09.09.2003 EP 03020332
(43) Veröffentlichungstag der Anmeldung: 16.03.2005
(73) Patentinhaber: BorgWarner Inc., Auburn Hills, MI 48326 (US)
(72) Erfinder: Gerlach, Martin, 68775 Ketsch (DE); Hertel, Marcus, 68169 Mannheim (DE)
(74) Vertreter: Patentanwälte Westphal, Mussgnug & Partner

(56) Entgegenhaltungen:
- EP-A- 1 195 537
- GB-A- 2 151 748
- US-A- 3 384 214
- US-A- 6 116 837

## Beschreibung

Die Erfindung betrifft eine Kraftfahrzeugkupplung gemäß dem Oberbegriff des Patentanspruchs 1.

Eine Doppelkupplung gemäß dem Stand der Technik, von der die Erfindung ausgeht, ist beispielsweise in der EP 1 195 537 A1 oder der DE 199 21 687 A1 bekannt. Aus dem Stand der Technik ist es bekannt, die Kupplungseinrichtung mit den beiden Einzelkupplungen zusammen mit der Drehdurchführung in der Art eines Moduls vorzumontieren. Zu diesem Zweck wird die Drehdurchführung mit der Kupplungseinrichtung verschraubt.

Obwohl sich dieses Verfahren dem Grunde nach bewährt hat, ist es erforderlich, diese Verschraubung beim Montieren der Doppelkupplung an das Getriebe wieder zu lösen, was vergleichsweise umständlich ist. Danach muss die Kupplungseinrichtung an dem Getriebe axial fixiert werden.

Die Aufgabe der Erfindung besteht daher darin, eine Kraftfahrzeugkupplung vorzustellen, welche komplett vormontiert wesentlich einfacher in einem (Fahrzeug) Getriebe montierbar und demontierbar ist.

Diese Aufgabe wird durch eine Kraftfahrzeugkupplung mit den Merkmalen des Patentanspruchs 1 gelöst.

Vorteilhafte Ausführungen und Weiterbildungen der Erfindung sind in den Unteransprüchen angegeben.

Erfindungsgemäß ist demnach eine Verrasteinrichtung zur axialen Fixierung der Einrichtung an der Drehdurchführung vorgesehen, die eine umlaufende im wesentlichen radial abstehende Rastnase oder mehrere über den Umfang verteilte im wesentlichen radial abstehende Rastnasen aufweist, welche in eine oder mehrere an einem Innenumfang oder an einem Außenumfang der Drehdurchführung angeordnete Nut bzw. Nuten, Ausnehmung bzw. Ausnehmungen oder dergleichen eingreifbar ausgebildet ist bzw. sind.

In besonders vorteilhafter Ausgestaltung der Erfindung ist eine weitere Verrasteinrichtung zur drehfesten Fixierung der Einrichtung an der Drehdurchführung und/ oder eindeutigen Festlegung einer Einbaulage um die Drehachse vorgesehen. Damit wird erreicht, dass das Bauteil nicht rotationssymmetrisch ausgeführt wird und dadurch weitere Funktionen realisiert werden können (Durchstellungen, Umlenkkanten für Ölführung). Des Weiteren setzt die Abstützung von Lagerkräften eine drehfeste Fixierung voraus.

Diese weitere Verrasteinrichtung kann beispielsweise mehrere über den Umfang verteilte im wesentlichen radial abstehende Rastnasen aufweisen, welche in mehrere an einem Innenumfang oder an einem Außenumfang der Drehdurchführung angeordnete Nuten, Ausnehmungen oder dergleichen eingreifbar ausgebildet sind.

Die weitere Verrasteinrichtung kann alternativ oder zusätzlich mehrere über den Umfang verteilte im wesentlichen axial abstehende Rastnasen aufweisen, welche in korrespondierende an der Drehdurchführung angeordnete Nuten, Ausnehmungen oder dergleichen eingreifbar ausgebildet sind.

Die weitere Verrasteinrichtung kann alternativ oder zusätzlich durch Ausnehmungen (Löcher, Rippen, Durchstellungen) in der Einrichtung zur axialen Sicherung einer Kupplungseinrichtung dargestellt werden, in die axial abstehende korrespondierende Geometrien (Nasen) an der Drehdurchführung und/ oder weiterer Bauteile eingreifen.

Schließlich kann wenigstens eine Gleitlagereinrichtung für ein angrenzendes Bauteil der Einrichtung vorgesehen sein. Ein separates Einsetzen von Gleitlagern, Wälzlagern und/ oder Anlaufflächen ist nicht mehr erforderlich, was ebenso Vorteile hinsichtlich der Montage bietet.

Zwei Ausführungsbeispiele der Erfindung sind in der Zeichnung dargestellt. Es zeigen:
- Figur 1: einen Antriebsstrang mit einem ersten Ausführungsbeispiel einer erfindungsgemäßen Kraftfahrzeugkupplung im Axialhalbschnitt
- Figur 2: eine Detaildarstellung eines zweiten Ausführungsbeispiels einer erfindugsgemäßen Kraftfahrzeugkupplung im Axialhalbschnitt
- Figur 3: eine Detaildarstellung eines dritten Ausführungsbeispiels einer erfindungsgemäßen Kraftfahrzeugkupplung im Axialhalbschnitt
- Figur 4: eine Detaildarstellung eines vierten Ausführungsbeispiels einer erfindungsgemäßen Kraftfahrzeugkupplung im Axialhalbschnitt.

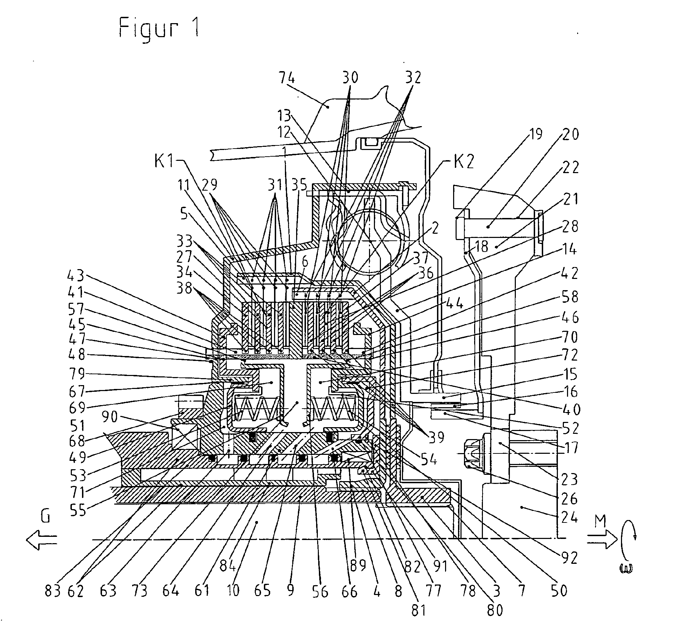

Die Figur 1 verdeutlicht anhand eines Ausschnittes aus einem beispielhaft gewählten Antriebsstrang für ein Kraftfahrzeug einen möglichen Grundaufbau und die Funktionsweise einer erfindungsgemäß gestalteten Kraftfahrzeugkupplung mit einer Einrichtung zur axialen Sicherung einer Kupplungseinrichtung an einer Drehdurchführung einer Doppelkupplung.

Auf der rechten Seite der Zeichnungsfigur ist eine als Antriebswelle dienende Kurbelwelle 24 angedeutet, welche beispielsweise mit einer Verbrennungskraftmaschine, einem Motor M oder dergleichen gekoppelt ist. Diese Seite stellt die Antriebsseite des Antriebsstrangs dar.

Auf der linken Seite des Zeichnungsblattes sind zwei Getriebeeingangswellen, nämlich eine Zentral- oder Vollwelle 10 und eine Hohlwelle 9 zu sehen, welche aus der Kupplungsglocke 74 der Doppelkupplung herausgeführt sind und beispielsweise mit einem hier nicht dargestellten Getriebe G oder dergleichen gekoppelt sind. Diese Seite stellt die Abtriebsseite des Antriebsstrangs dar.

So kann beispielsweise die erste Getriebeeingangswelle (Zentral- oder Vollwelle 10) zum Betrieb aller ungeraden Gänge (z. B. 1, 3, 5 ...) und die zweite Getriebeeingangswelle (Hohlwelle 9) zum Betrieb aller geraden Gänge (z. B. 2, 4, 6 ...) des Kraftfahrzeugs vorgesehen sein. Der Rückwärtsgang könnte sowohl der ersten Getriebeeingangswelle (Zentral- oder Vollwelle 10), als auch der zweiten Getriebeeingangswelle (Vollwelle 9) des Getriebes G zugeordnet sein.

Der Antriebsstrang umfasst ferner eine Schwungmasse 21, eine biege-/taumelweiche Scheibe 18, einen Torsionsschwingungsdämpfer 12 sowie die vorstehend genannte Doppelkupplung, mittels der die Abtriebswellen 9, 10 schaltbar mit der Antriebswelle 24 verbindbar sind.

Dieser Antriebsstrang wird von einem äußeren Gehäuse umschlossen. Dieses äußere Gehäuse wird durch eine Kupplungsglocke 74 gebildet. Diese Kupplungsglocke 74 umschließt die beiden als nasslaufende Lamellenkupplungen ausgeführten Kupplungen K1, K2, den Drehschwingungsdämpfer 12, die biege- und/oder taumelweiche Scheibe 18 sowie die Schwungmasse 21.

Es sei noch einmal explizit darauf hingewiesen, dass die Einheit aus Kupplung K1 und Kupplung K2 eine Kupplungseinrichtung im Sinne des Patentanspruchs 1 definiert.

Der Dreh- oder Torsionsschwingungsdämpfer 12 ist in an sich bekannter Art und Weise ausgebildet. Eingangsseitig weist er ein Primärelement 14 in Form einer Halbschale auf. Ausgangsseitig ist ein Sekundärelement bestehend aus einer ersten Halbschale 13 und einer zweiten Halbschale 11, welche zugleich das Kupplungsgehäuse bildet, vorgesehen. Primärelement 14 und Sekundärelement 13, 11 sind über eine Mehrzahl von an dem Außenumfang des Drehschwingungsdämpfers 12 angeordnete Federpakete in Drehrichtung ein Drehmoment übertragbar gekoppelt. Exemplarisch ist ein Federpaket in der Zeichnung dargestellt.

Die beiden Halbschalen 11 und 14 des Torsionsschwingungsdämpfers 12 umschließen die beiden einzelnen Kupplungen K1, K2 der Doppelkupplung.

Jede Kupplung K1, K2 umfasst jeweils einen Außenlamellenträger 1, 2 und einen gemeinsamen Innenlamellenträger 40. Der Außenlamellenträger der ersten Kupplung K1 wird nachfolgend als erster Außenlamellenträger 1, der Außenlamellenträger der zweiten Kupplung K2 wird im Folgenden als zweiter Außenlamellenträger 2 bezeichnet.

Die beiden Außenlamellenträger 1, 2 sind halbschalenförmig ausgebildet, wobei der erste Außenlamellenträger 1 den zweiten Außenlamellenträger 2 in axialer Richtung überragend umgreift. Der Innenlamellenträger 40 weist eine im Wesentlichen zylinderförmige Gestalt auf und erstreckt sich über die axial verlaufenden Bereiche der halbschalenförmigen Außenlamellenträger 1, 2.

Die beiden Außenlamellenträger 1, 2 weisen Innenverzahnungen 5, 6 auf, welche zur axial verschieblichen aber im Wesentlichen drehfesten Führung von im vorliegenden Fall jeweils vier entsprechende Außenverzahnungen 31, 32 aufweisenden Reiblamellen 29, 30 dienen. Letztere werden üblicherweise auch als Außenlamellen 29, 30 bezeichnet.

In entsprechender Weise sind am Außenumfang der den jeweiligen Außenlamellenträgern 1, 2 zugeordneten Innenlamellenträgerabschnitten des gemeinsamen Innenlamellenträgers 40 Außenverzahnungen 41, 42 angeordnet, in denen Innenverzahnungen aufweisende Reiblamellen, die sogenannten Innenlamellen 36, axial verschieblich aber drehfest geführt sind. Die beiden Innenlamellenträgerabschnitte werden durch eine gemeinsame Endplatte 35 voneinander getrennt.

An den beiden äußeren Enden des gemeinsamen Innenlamellenträgers 40 sind jeweils Druckplatten 34, 37 in gleicher Weise wie die vorstehend genannten Innenlamellen 36 axial verschieblich aber im Wesentlichen drehfest geführt.

Die äußeren Reiblamellen/Außenlamellen 29, 30, die inneren Reiblamellen/Innenlamellen 33, 36 sowie die beiden Druckplatten 34, 37 und die gemeinsame Endplatte 35 greifen wechselseitig verzahnungsartig in an sich bekannter Weise jeweils ein einer Kupplung K1, K2 zugeordnetes Lamellenpaket 27, 28 bildend ineinander.

Die beiden Lamellenpakete 27, 28 mit den entsprechenden Reiblamellen 29, 30, 33, 34, 35, 36, 37 sind somit auf dem gemeinsamen Innenlamellenträger 40 in axialer Richtung hintereinanderliegend angeordnet. Im vorliegenden Ausführungsbeispiel sind die Reibflächen aller Reiblamellen 29, 30, 33, 34, 35, 36, 37 im Wesentlichen gleich groß, sodass die einzelnen Kupplungen K1, K2 eine gleichwertige Leistungsfähigkeit aufweisen. Selbstverständlich ist es auch möglich, dass die Reibflächen der Reiblamellen 29, 30, 33, 34, 35, 36, 37 verschieden große Außen- und/oder Innendurchmesser aufweisen.

Bestandteile der Kupplungen K1, K2 sind ferner nachfolgend im Detail beschriebene Kolben-/Zylinder-Einheiten, welche zur Betätigung der Kupplungen K1, K2 dienen. Insbesondere ist jeder Kupplung K1, K2 ein hydraulisch betätigbarer Betätigungskolben 43, 44 zugeordnet. Jeder dieser Betätigungskolben 43, 44 kann gegen eine der Druckplatten 34, 37 kraftübertragend und Reibschluss zwischen den einzelnen Reiblamellen 29, 30, 33, 34, 35, 36, 37 erzeugend und damit die jeweilige Kupplung K1, K2 betätigend gedrückt werden.

Wie sich insbesondere der Figur 1 entnehmen lässt, werden die beiden Kupplungen K1, K2 nach innen gerichtet betätigt, wobei die Reaktionskräfte gegen die gemeinsame Endplatte 35 wirken.

Der gemeinsame Innenlamellenträger 40 durchsetzt die beiden zur Betätigung der Kupplungen K1, K2 notwendigen ringförmigen Betätigungskolben 43, 44. Zu diesem Zweck weist der Innenlamellenträger jeweils endseitig über dem Außenumfang im Wesentlichen axial verlaufende Stege auf, welche entsprechende Öffnungen 45, 46 der jeweiligen Betätigungskolben 43, 44 verzahnungsartig durchgreifen. Einendseitig durchgreifen diese Stege auch korrespondierend hierzu im Kupplungsgehäuse 11 vorgesehene Öffnungen 47. Die Öffnungen 47 im Kupplungsgehäuse 11 (sowie in der Regel auch die Öffnungen 45, 46 in den Betätigungskolben 43, 44) sind in ihren Umfangsabmessungen so aufeinander abgestimmt, dass eine Relativverdrehung nicht möglich ist. Der Innenlamellenträger 40 ist auf diese Weise drehfest mit dem Kupplungsgehäuse 11 verbunden.

Um eine axiale Verschiebung des Innenlamellenträgers 40 zu verhindern, ist ein Sicherungsring 48 vorgesehen, welcher den Innenlamellenträger 40 am Kupplungsgehäuse 11 fixiert hält.

Das Kupplungsgehäuse 11 ist an einer Nahtstelle 67 starr mit einer Kupplungsnabe 61 verbunden. Diese Kupplungsnabe 61 umgreift die beiden Getriebeeingangswellen 9, 10 koaxial. Die Kupplungsnabe 61 trägt einen halbschalenförmigen Zylinder 77. Dieser Zylinder 77 ist mittels eines Sicherungsrings 78 in seiner Axialverschiebung begrenzt.

Bestandteil des Kupplungsgehäuses 11 ist ein Zylinder 79 in zu dem Zylinder 77 korrespondierender Art. An den beiden Zylindern 77, 79 sind die jeweiligen Betätigungskolben 43, 44 axial verschieblich geführt. Zylinder 77 und Betätigungskolben 44 dienen als Abstützung und Zentrierung für den Innenlamellenträger 40.

Die Betätigungseinrichtungen für die beiden Kupplungen K1, K2 umfassen neben den vorerwähnten Betätigungskolben 43, 44, mittels derer die jeweiligen Druckplatten 34, 37 der Lamellenpakete 27, 28 in Richtung der gemeinsamen Endplatten 35 verschoben werden können, jeweils einen Druckkolben 49, 50, einen Kolben 51, 52, einen Ausgleichskolben 55, 56 sowie eine Mehrzahl in Umfangsrichtung angeordneter Schraubenfedern 53, 54. Die jeweiligen Betätigungskolben 43, 44 stützen sich nach außen gegen die jeweiligen Druckkolben 49, 50 ab, welche axial verschieblich an den Zylindern 79, 77 und am Außenumfang der Kupplungsnabe 61 geführt sind. Nach innen gerichtet stützen sich die Betätigungskolben 43, 44 gegen die Kolben 51, 52 ab. Diese wiederum stützen sich nach innen gerichtet gegen die Schraubenfedern 53, 54 ab. Die Schraubenfedern 53, 54 sind nach innen gerichtet gegen die Außenflächen der Kompensationskolben 55, 56 abgestützt. Diese Kompensationskolben 55, 56 stützen sich mit deren Innenflächen gegen radial nach innen gerichtete umlaufende Umfangsstege 57, 58 am Innenlamellenträger 40 ab.

Obwohl die gesamte Kupplungseinrichtung bestehend aus den Beiden Einzelkupplungen K1 und K2, inklusive Kupplungsgehäuse 11 und Außenlamellenträgern 1, 2 unmittelbar auf der zweiten Getriebeeingangswelle (Hohlwelle 9) gelagert werden könnte, ist bei der vorliegenden Ausführungsform eine separate Drehdurchführung 62 vorgesehen, welche die beiden Getriebeeingangswellen, die Hohlwelle 9 und die Vollwelle 10, koaxial umgreift und auf welchem die Kupplungsnabe 61 mittels eines Radial-Rollenlagers 89 und eines Radial-Kugellagers 90 drehbar gelagert ist.

Die Drehdurchführung 62 kann einteilig oder sowohl axial als auch radial mehrteilig ausgeführt sein. Im vorliegenden Fall ist der Drehdurchführung 62 zweiteilig ausgeführt. Er besteht aus einem Mantel 83 und einer von diesem umschlossenen Buchse 84. Die zylindermantelförmige Buchse 84 weist in deren Außenumfang in axialer und/ oder radialer Richtung verlaufende, unterschiedlich lange Längsnuten auf. Der Mantel 83 weist korrespondierend zur Anordnung der vorerwähnten Längsnuten vier in Umfangsrichtung verlaufende Nuten auf. Diese Umfangsnuten sind über radial verlaufende hier nicht dargestellte Öffnungen mit den entsprechenden Längsnuten verbunden.

Korrespondierend zu den Umfangsnuten weist die Kupplungsnabe 61 vier im Wesentlichen radial und zum Teil axial geneigt verlaufende Öffnungen auf, welche nachfolgend als Hydraulikflüssigkeitskanäle 63, 64, 65 und 66 bezeichnet sind. Über die Nuten in der Buchse 84, die Öffnungen und Nuten im Mantel 83 und der Hydraulikflüssigkeitskanäle 63, 64, 65, 66 in der Kupplungsnabe 61 erfolgt eine Versorgung der durch die Kolben 43, 44, 49, 50, 55, 56 gebildeten Volumina (erster Hydraulikflüssigkeitsbetätigungsraum 71, zweiter Hydraulikflüssigkeitsbetätigungsraum 72, erster Hydraulikflüssigkeitsausgleichsraum 69, zweiter Hydraulikflüssigkeitsausgleichsraum 70, Kühlflüssigkeitsraum 73) mit Hydraulikflüssigkeit.

Über den ersten Hydraulikflüssigkeitskanal 63 kann der erste Hydraulikflüssigkeitsbetätigungsraum 71 mit Hydraulikflüssigkeit druckbeaufschlagt werden. Dieser Hydraulikflüssigkeitsdruck drückt den Druckkolben 49 und damit den Betätigungskolben 45 und den Kolben 51 entgegen dem Druck der Schraubenfedern 53 nach innen. Eine derartige Verschiebung des Betätigungskolbens 45 hat zur Folge, dass dessen Außenumfang gegen die Druckplatte 34 der ersten Kupplung K1 diese betätigend gedrückt wird.

In gleicher Weise kann über den vierten Hydraulikflüssigkeitskanal 66 der zweite Hydraulikflüssigkeitsbetätigungsraum 72 mit Hydraulikflüssigkeit druckbeaufschlagt werden. Auf Grund dieses Hydraulikflüssigkeitsdrucks wird der Druckkolben 50 und damit der Betätigungskolben 44 und der Kolben 52 entgegen dem Druck der Schraubenfedern 54 nach innen gedrückt. Dies hat in entsprechender Weise zur Folge, dass der Außenumfang des Betätigungskolbens 44 gegen die Druckplatte 37 der zweiten Kupplung K2 diese betätigend gedrückt wird.

Über die beiden Hydraulikflüssigkeitskanäle 64 und 65 werden einerseits die Hydraulikflüssigkeitsausgleichsräume 69, 70 als auch der Kühlflüssigkeitsraum 73 mit Hydraulikflüssigkeit befüllt.

Die Hydraulikflüssigkeit in den Hydraulikflüssigkeitsausgleichsräumen 69, 70 dient dazu, einen fliehkraftbedingten Hydraulikflüssigkeitsgegendruck zu erzeugen, welcher der fliehkraftbedingten Druckzunahme im jeweiligen Hydraulikflüssigkeitsbetätigungsraum 71, 72 entgegen wirkt.

Die Hydraulikflüssigkeit im Kühlflüssigkeitsraum 73 wird zur Kühlung der Reiblamellen 29 30 33, 34, 35, 36, 37 durch radial verlaufende (hier nicht dargestellte) Öffnungen im Innenlamellenträger 40 zu den Reiblamellen 29, 30, 33, 34, 35, 36, 37 geführt.

Die vorstehend im Detail beschriebenen Komponenten des Antriebsstranges sind wie folgt miteinander verbunden. Die Kurbelwelle 24 ist mit dem Innenumfang der Schwungmasse 21 verschraubt (Schraube 26, Bohrung 23). Der Außenumfang der Schwungmasse 21 ist mit dem Außenumfang der biege-/taumelweichen Scheibe 18 vernietet (Außenrandbohrung 19, Niete 20, Bohrung 22). Der Innenumfang der biege-/taumelweichen Scheibe 18 trägt einen Innenflansch 17 mit einer Außenverzahnung. Diese Außenverzahnung greift in der Art einer Steckverzahnung 16 in eine Innenverzahnung des Primärelements 14 des Torsionsschwingungsdämpfers 12 eine drehfeste Verbindung herstellend ein.

Das Sekundärelement 13 des Torsionsschwingungsdämpfers 12, welches zugleich das Kupplungsgehäuse bildet, ist in vorstehend beschriebener Weise drehfest mit dem Innenlamellenträger 40 der Doppelkupplung verbunden.

Die beiden Kupplungen (Lamellenpakete 27, 28; Betätigungskolben 44, 45) verbinden den Innenlamellenträger 40 schaltbar mit den Außenlamellenträgern 1, 2, welche wiederum über deren Flansche 3, 4 mittels Steckverzahnung 7, 8 drehfest mit den beiden Getriebeeingangswellen 9, 10 verbunden sind.

Ein über die Kurbelwelle 24 eingeleitetes Drehmoment kann also mittels der Doppelkupplung auf eine der beiden Getriebeeingangswellen 9, 10 übertragen werden.

Der Vollständigkeit halber sei erwähnt, dass eine über die Kurbelwelle 24 eingeleitete Drehbewegung über ein an der Kupplungsnabe 61 angeordnetes Pumpenantriebszahnrad 68 auch eine hier nicht dargestellte Hydropumpe zur Bereitstellung des vorstehend erwähnten Hydraulikflüssigkeitsdrucks antreibt.

Aus dem Stand der Technik ist es bekannt, die Kupplungseinrichtung mit den beiden Einzelkupplungen K1 und K2, dem Kupplungsgehäuse 11, den Außenlamellenträgern 1, 2, dem Innenlamellenträger 40, den Kolben-/Zylindereinheiten und der Kupplungsnabe 61 zusammen mit der Drehdurchführung 62 in der Art eines Moduls vorzumontieren. Zu diesem Zweck sieht die Erfindung anstelle einer gemäß dem Stand der Technik bekannten Verschraubung von Kupplungseinrichtung und Drehdurchführung 62 eine axiale Verschiebesicherungseinrichtung 80 mit einer lösbaren Clipverbindung zwischen Kupplungseinrichtung, insbesondere Kupplungsnabe 61 und Drehdurchführung 62 vor.

Diese Verschiebesicherungseinrichtung 80 ist in der Art einer Scheibe 92 ausgebildet, welche sich radial von dem Mantel 83 der Drehdurchführung 62 bis über den Innendurchmesser der Kupplungsnabe 61 erstreckt. Die Scheibe 92 mündet innenumfangsseitig in eine rohrförmige Hülse 91, welche endseitig eine umlaufende oder mehrere über den Umfang verteilte Rastnasen 81 trägt. Diese Rastnase 81 bzw. diese Rastnasen greift bzw. greifen in eine oder mehrere entsprechende Nut bzw. Nuten 82 ein, welche sich am Innenumfang des Mantels 83 der Drehdurchführung 62 befindet bzw. befinden. Auf diese Weise ist die Verschiebesicherungseinrichtung 80 axial unverschieblich mit der Drehdurchführung 62 verbunden. Die Scheibe 92 verhindert damit ein axiales Verschieben der Kupplungsnabe 61 gegenüber der Drehdurchführung 62.

Sind mehrere über den Umfang verteilte Rastnasen 81 vorhanden, welche in korrespondierende Nuten 82 eingreifen, so kann auch eine drehfeste Verbindung zwischen Verschiebesicherungseinrichtung 80 und Drehdurchführung 62 hergestellt werden.

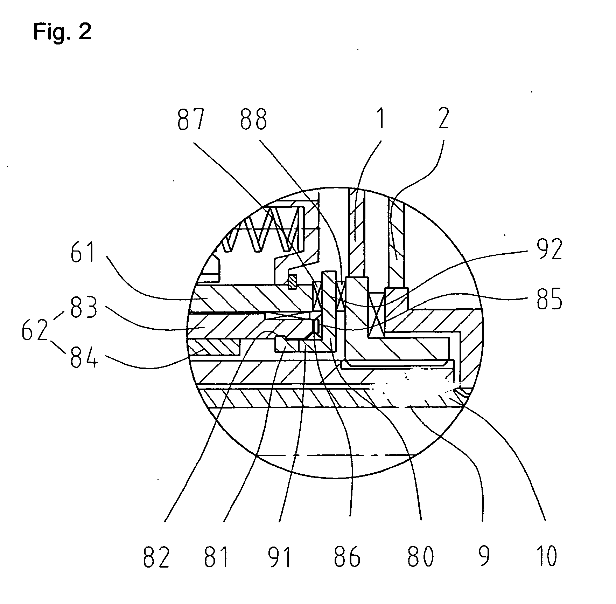

Die Figur 2 zeigt einen Ausschnitt aus einem weiteren Ausführungsbeispiel einer erfindungsgemäßen Kraftfahrzeugkupplung, bei dem wieder eine Doppelkupplung und zudem eine zweite Ausgestaltungsvariante einer Axialverschiebesicherungseinrichtung vorgesehen sind. Dargestellt ist wiederum eine zweiteilig ausgeführte Drehdurchführung 62 der vorstehend im Detail beschriebenen Art umfassend einen Mantel 83 und eine Buchse 84 sowie eine diese umgreifende Kupplungsnabe 61.

Ähnlich wie im vorstehend beschriebenen Ausführungsbeispiel ist diese Axialverschiebesicherungseinrichtung in der Art einer Scheibe 92 ausgebildet, welche sich radial von dem Mantel 83 der Drehdurchführung 62 bis zum Außenumfang der Kupplungsnabe 61 erstreckt. Die Scheibe 92 mündet wie vorher innenumfangsseitig in eine rohrförmige Hülse 91, welche endseitig eine umlaufende oder mehrere über den Umfang verteilte im wesentlichen radial abstehende Rastnasen 81 trägt. Diese Rastnase 81 bzw. diese Rastnasen greift bzw. greifen in eine oder mehrere entsprechende Nut bzw. Nuten 82 ein, welche sich am Innenumfang des Mantels 83 der Drehdurchführung 62 befindet bzw. befinden. Auf diese Weise ist die Verschiebesicherungseinrichtung axial unverschieblich mit der Drehdurchführung 62 verbunden. Die Scheibe 92 verhindert damit ein axiales Verschieben der Kupplungsnabe 61 gegenüber der Drehdurchführung 62.

Zusätzlich stehen von der Scheibe 92 über den Umfang verteilt axial eine Mehrzahl von Rastnasen 85 ab. Diese Rastnasen 85 greifen in entsprechende radial verlaufende Nuten 86 im Mantel 83 der Drehdurchführung 62 ein. Diese zusätzliche Verrasteinrichtung verhindert ein verdrehen der Verschiebesicherungseinrichtung gegenüber der Drehdurchführung 62.

Schließlich sind an beiden Radialflächen der Scheibe 92 im Bereich der Kupplungsnabe 61 Axiallager 87, 88 (Gleitlager) vorgesehen, an denen im vorliegenden Ausführungsbeispiel die Kupplungsnabe 61 bzw. der Außenlamellenträger 2 der zweiten Kupplung 2 gleitend geführt sind.

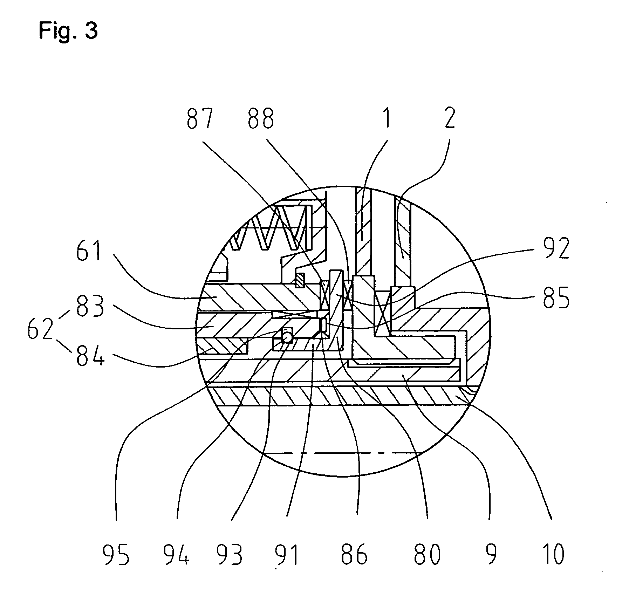

Die Figur 3 zeigt einen Ausschnitt aus einem weiteren Ausführungsbeispiel einer erfindungsgemäßen Kraftfahrzeugkupplung, bei welchem erneut eine Doppelkupplung und ferner eine weitere Ausgestaltungsvariante einer Axialverschiebesicherungeinrichtung vorgesehen sind. Sind eine bzw. mehrere Nut bzw. Nuten 95 und 93 in die Drehdurchführung 62 und Verschiebesicherungseinrichtung 80 eingebracht, so kann die axiale Sicherung auch durch ein weiteres Bauteil 94 hergestellt werden.

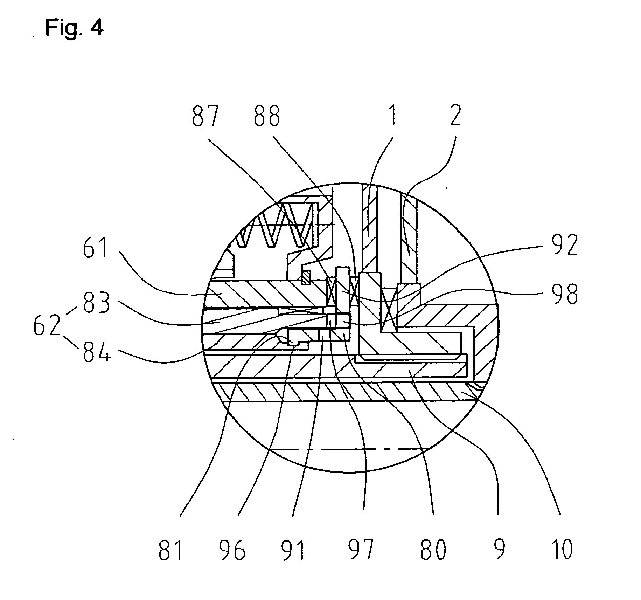

Die Figur 4 zeigt einen Ausschnitt aus einem aus einem weiteren Ausführungsbeispiel einer erfindungsgemäßen Kraftfahrzeugkupplung, bei welchem erneut eine Doppelkupplung und zudem eine weitere Ausgestaltungsvariante einer Axialverschiebesicherungeinrichtung vorgesehen sind. Deren Rastnase 81 bzw. Rastnasen greift bzw. greifen in eine oder mehrere entsprechende Nut bzw. Nuten 96 ein, welche sich am Außenumfang des Mantels 83 oder der Buchse 84 der Drehdurchführung 62 befindet bzw. befinden. Auf diese Weise ist die Verschiebesicherungseinrichtung 80 axial unverschieblich mit der Drehdurchführung 62 verbunden. Zusätzlich stehen von der Drehdurchführung 62 über den Umfang verteilt axial eine Mehrzahl von Rastnasen 85 ab. Diese Rastnasen 85 greifen in entsprechende radial verlaufende Nuten 86 im Mantel 83 der Drehdurchführung 62 ein. Diese zusätzliche Verrasteinrichtung verhindert ein verdrehen der Verschiebesicherungseinrichtung gegenüber der Drehdurchführung 62.

### Bezugszeichenliste

- 1: erster Außenlamellenträger
- 2: zweiter Außenlamellenträger
- 3: erster Flansch
- 4: zweiter Flansch
- 5: Innenverzahnung
- 6: Innenverzahnung
- 7: Steckverzahnung
- 8: Steckverzahnung
- 9: Hohlwelle
- 10: Vollwelle
- 11: Kupplungsgehäuse
- 12: Torsionsschwingungsdämpfer
- 13: Sekundärelement
- 14: Primärelement
- 15: Primärflansch
- 16: Steckverzahnung
- 17: Innenflansch
- 18: biege-/taumelweiche Scheibe
- 19: Außenrandbohrung
- 20: Niet
- 21: Schwungmasse
- 22: Bohrung
- 23: Bohrung
- 24: Kurbelwelle
- 25: Gewindebohrung
- 26: Schraube
- 27: erstes Lamellenpaket
- 28: zweites Lamellenpaket
- 29: Außenlamelle
- 30: Außenlamelle
- 31: Außenverzahnung
- 32: Außenverzahnung
- 33: Innenlamelle
- 34: Druckplatte
- 35: Endplatte
- 36: Innenlamelle
- 37: Druckplatte
- 38: Innenverzahnung
- 39: Innenverzahnung
- 40: Innenlamellenträger
- 41: Außenverzahnung
- 42: Außenverzahnung
- 43: erster Betätigungskolben
- 44: zweiter Betätigungskolben
- 45: Öffnung
- 46: Öffnung
- 47: Öffnung
- 48: Sicherungsring
- 49: Druckkolben
- 50: Druckkolben
- 51: Kolben
- 52: Kolben
- 53: Schraubenfeder
- 53a: Schraubenfeder
- 54: Schraubenfeder
- 55: Kompensationskolben
- 56: Kompensationskolben
- 57: Umfangssteg
- 58: Umfangssteg
- 59: Ringelement
- 60: Sicherungsring
- 61: Kupplungsnabe
- 62: Drehdurchführung
- 63: Hydraulikflüssigkeitskanal
- 64: Hydraulikflüssigkeitskanal
- 65: Hydraulikflüssigkeitskanal
- 66: Hydraulikflüssigkeitskanal
- 67: Nahtstelle
- 68: Pumpenantriebszahnrad
- 69: erster Hydraulikflüssigkeitsausgleichsraum
- 70: zweiter Hydraulikflüssigkeitsausgleichsraum
- 71: erster Hydraulikflüssigkeitsbetätigungsraum
- 72: zweiter Hydraulikflüssigkeitsbetätigungsraum
- 73: Kühlflüssigkeitsraum
- 74: Kupplungsglocke
- 75: erstes Kühlflüssigkeitsleitblech
- 76: zweites Kühlflüssigkeitsleitblech
- 77: Zylinder
- 78: Zylinder
- 79: Zylinder
- 80: Axialverschiebesicherungseinrichtung
- 81: Rastnase
- 82: Innenumfangsnut
- 83: Mantel
- 84: Buchse
- 85: Rastnase
- 86: Radialnut
- 87: Axiallager
- 88: Axiallager
- 89: Radial-Rollenlager
- 90: Radial-Kugellager
- 91: Hülse
- 92: Scheibe
- 93: Außenumfangsnut
- 94: Sicherungselement
- 95: Innenumfangsnut
- 96: Außenumfangsnut
- 97: abstehende Geometrie
- 98: Ausnehmung

- K1: erste Kupplung
- K2: zweite Kupplung

## Patentansprüche

1. Kraftfahrzeugkupplung, aufweisend
- eine Kupplungseinrichtung (K1, K2), insbesondere Doppelkupplungseinrichtung (K1, K2),
- eine Drehdurchführung (62) um welche die Kupplungseinrichtung (K1, K2) drehbar gelagert ist,
- eine Einrichtung (80) zur axialen Sicherung der Kupplungseinrichtung (K1, K2) mit einer Verrasteinrichtung (81, 82),
- wobei die Einrichtung (80) mittels der Verrasteinrichtung (81, 82) an der Drehdurchführung (62) axial fixierbar ist,
**dadurch gekennzeichnet, dass** die Verrasteinrichtung (81, 82) eine umlaufende im wesentlichen radial abstehende Rastnase (81) oder mehrere über den Umfang verteilte im wesentlichen radial abstehende Rastnasen (81) aufweist, welche in eine oder mehrere an einem Innenumfang oder an einem Außenumfang der Drehdurchführung (62) angeordnete Nut (82) bzw. Nuten (82) eingreifbar ausgebildet ist bzw. sind.

2. Kraftfahrzeugkupplung nach Anspruch 1
**dadurch gekennzeichnet, dass** die Verrasteinrichtung und/ oder die Drehdurchführung an einem Innen- und/ oder Außendurchmesser angeordnete Nutgeometrie(n) aufweist, in die ein weiteres Bauteil (94) eingreift.

3. Kraftfahrzeugkupplung nach einem der Ansprüche 1 bis 2,
**dadurch gekennzeichnet, dass**
eine weitere Verrasteinrichtung (81, 82; 85, 86) zur drehfesten Fixierung der Einrichtung (80) an der Drehdurchführung (62) vorgesehen ist.

4. Kraftfahrzeugkupplung nach Anspruch 3,
**dadurch gekennzeichnet, dass**
die weitere Verrasteinrichtung (81) mehrere über den Umfang verteilte im wesentlichen radial abstehende Rastnasen (81) aufweist, welche in mehrere an einem Innenumfang oder an einem Außenumfang der Drehdurchführung (62) angeordnete Nuten (82) eingreifbar ausgebildet sind.

5. Kraftfahrzeugkupplung nach einem der Ansprüche 3 oder 4,
**dadurch gekennzeichnet, dass**
die weitere Verrasteinrichtung (85, 86) mehrere über den Umfang verteilte im wesentlichen axial abstehende Rastnasen (85) aufweist, welche in korrespondierende an der Drehdurchführung (62) angeordnete Nuten (82) eingreifbar ausgebildet sind.

6. Kraftfahrzeugkupplung nach einem der Ansprüche 3 bis 5,
**dadurch gekennzeichnet, dass** die weitere Verrasteinrichtung alternativ oder zusätzlich durch Ausnehmungen (98) in der Einrichtung zur axialen Sicherung einer Kupplungseinrichtung dargestellt wird, in die axial abstehende Geometrien (97) an der Drehdurchführung (62) und/ oder anderen Bauteilen eingreifen.

7. Kraftfahrzeugkupplung nach einem der vorangegangenen Ansprüche,
**dadurch gekennzeichnet, dass**
wenigstens eine Gleitlagereinrichtung (87, 88) für ein angrenzendes Bauteil der Einrichtung (80) vorgesehen ist.

## Claims

1. Motor vehicle clutch, having
- a clutch device (K1, K2), in particular double clutch device (K1, K2),
- a rotary joint (62) about which the clutch device (K1, K2) is rotatably mounted, and
- a device (80) for axially securing the clutch device (K1, K2) with a latching device (81, 82),
- the device (80) being axially fixable on the rotary joint (62) by means of the latching device (81, 82),
**characterized in that** the latching device (81, 82) has an encircling, essentially radially protruding latching lug (81) or a plurality of essentially radially protruding latching lugs (81) which are distributed over the circumference, said latching lug or latching lugs being designed such that they can engage in a groove (82) or more than one groove (82) arranged on an inner circumference or on an outer circumference of the rotary joint (62).

2. Motor vehicle clutch according to Claim 1, **characterized in that** the latching device and/or the rotary joint has/have a groove geometry/geometries which is/are arranged on an inside and/or outside diameter and in which a further component (94) engages.

3. Motor vehicle clutch according to either of Claims 1 and 2, **characterized in that** a further latching device (81, 82; 85, 86) is provided for fixing the device (80) on the rotary joint (62) in a rotationally fixed manner.

4. Motor vehicle clutch according to Claim 3, **characterized in that** the further latching device (81) has a plurality of essentially radially protruding latching lugs (81) which are distributed over the circumference and are designed such that they can engage in a plurality of grooves (82) arranged on an inner circumference or on an outer circumference of the rotary joint (62).

5. Motor vehicle clutch according to either of Claims 3 and 4, **characterized in that** the further latching device (85, 86) has a plurality of essentially axially protruding latching lugs (85) which are distributed over the circumference and are designed such that they can engage in corresponding grooves (82) arranged on the rotary joint (62).

6. Motor vehicle clutch according to one of Claims 3 to 5, **characterized in that** the further latching device is alternatively or additionally represented by recesses (98) in the device for axially securing a clutch device, in which recesses axially protruding geometries (97) on the rotary joint (62) and/or other components engage.

7. Motor vehicle clutch according to one of the preceding claims, **characterized in that** at least one sliding bearing device (87, 88) is provided for an adjacent component of the device (80).

## Revendications

1. Embrayage de véhicule automobile, présentant
- un dispositif d'embrayage (K1, K2), notamment un dispositif d'embrayage double (K1, K2),
- un joint rotatif (62), autour duquel le dispositif d'embrayage (K1, K2) est monté à rotation,
- un dispositif (80) de fixation axiale du dispositif d'embrayage (K1, K2), avec un dispositif de crantage (81, 82),
- le dispositif (80) pouvant être fixé axialement sur le joint rotatif (62) au moyen du dispositif de crantage (81, 82),
**caractérisé en ce que** le dispositif de crantage (81, 82) présente un ergot de crantage (81) sur tout le pourtour, faisant saillie essentiellement radialement, ou plusieurs ergots de crantage (81) faisant saillie essentiellement radialement qui sont répartis sur le pourtour, ergot(s) qui est ou sont conçus pour pouvoir s'engager dans une rainure (82) ou plusieurs rainures (82) disposée(s) sur un pourtour intérieur ou sur un pourtour extérieur du joint rotatif (62).

2. Embrayage de véhicule automobile selon la revendication 1, **caractérisé en ce que** le dispositif de crantage et/ou le joint rotatif présente une ou des géométries de rainures disposées sur un diamètre intérieur et/ou extérieur, dans lesquelles s'engage un autre élément (94).

3. Embrayage de véhicule automobile selon la revendication 1 ou 2, **caractérisé en ce qu'**il est prévu un autre dispositif de crantage (81, 82 ; 85, 86) pour la fixation en solidarité de rotation du dispositif (80) sur le joint rotatif (62).

4. Embrayage de véhicule automobile selon la revendication 3, **caractérisé en ce que** l'autre dispositif de crantage (81) présente plusieurs ergots de crantage (81) faisant saillie essentiellement radialement qui sont répartis sur le pourtour, ergots qui sont conçus pour pouvoir s'engager dans plusieurs rainures (82) disposées sur un pourtour intérieur ou sur un pourtour extérieur du joint rotatif (62).

5. Embrayage de véhicule automobile selon la revendication 3 ou 4, **caractérisé en ce que** l'autre dispositif de crantage (85, 86) présente plusieurs ergots de crantage (85) faisant saillie essentiellement axialement qui sont répartis sur le pourtour, ergots qui sont conçus pour pouvoir s'engager dans des rainures correspondantes (82) disposées sur le joint rotatif (62).

6. Embrayage de véhicule automobile selon l'une quelconque des revendications 3 à 5, **caractérisé en ce que** l'autre dispositif de crantage est constitué, en remplacement ou en complément, par des évidements (98) dans le dispositif de fixation axiale d'un dispositif d'embrayage, dans lesquels s'engagent des géométries (97) faisant axialement saillie sur le joint rotatif (62) et/ou sur d'autres éléments.

7. Embrayage de véhicule automobile selon l'une quelconque des revendications précédentes, **caractérisé en ce qu'**il est prévu au moins un ensemble de palier lisse (87, 88) pour un élément limitrophe du dispositif (80).
